# EUROPÄISCHE PATENTSCHRIFT

(11) **EP 2 581 892 B1**
(45) Veröffentlichungstag und Bekanntmachung des Hinweises auf die Patenterteilung: **11.10.2017**
(21) Anmeldenummer: 12180233.4
(22) Anmeldetag: 13.08.2012
(51) Int. Cl.: G08G 1/16, B60R 1/00, G01S 15/93

(54) **Abstandsmesssystem sowie Verfahren zur Abstandsmessung insbesondere eines Fahrzeugs zu seiner Umgebung**
Distance measuring system and method for measuring distance, in particular between a vehicle and its surroundings
Système de mesure à distance ainsi que procédé de mesure à distance, en particulier d'un véhicule par rapport à son environnement

(30) Priorität: 13.10.2011 DE 102011084477
(43) Veröffentlichungstag der Anmeldung: 17.04.2013
(73) Patentinhaber: ROBERT BOSCH GMBH, 70442 Stuttgart (DE)
(72) Erfinder: Rottner, Gunter, Wixom, 48393 (US); Raisch, Florian, 71116 Gaertringen (DE)

(56) Entgegenhaltungen:
- EP-A2- 1 434 186
- DE-A1-102009 048 380
- US-A1- 2002 149 673
- US-A1- 2003 052 969
- US-A1- 2006 103 512

## Beschreibung

### Stand der Technik

Die vorliegende Erfindung betrifft ein Abstandsmesssystem, insbesondere zur Einparkassistenz, sowie ein Verfahren zur Abstandsmessung, insbesondere eines Fahrzeugs zu seiner Umgebung, wie es beispielsweise in einem Parkassistenzsystem Verwendung finden könnte. Bei einem Abstandsmesssystem, wie es z.B. in einem Parkassistenzsystem verwendet wird, werden im Allgemeinen über Abstandssensoren ermittelte Abstände eines Fahrzeugs zu seiner Umgebung ermittelt und entsprechende Informationen einem Fahrer des Fahrzeugs zur Verfügung gestellt bzw. innerhalb des Systems für weiterführende Schritte verwendet. Ändert sich die Konfiguration eines Fahrzeugs, beispielsweise durch Anbringung eines Fahrradanhängers bzw. eines Anhängers, so ist eine einwandfreie Abstandsmessung unter gewissen Umständen nicht mehr gewährleistet. Entweder sprechen die Abstandssensoren des Systems auf diese fest am Fahrzeug montierte Anbauten permanent an oder die Kalibrierung der Sensoren berücksichtigt nicht, dass Umgebungs- und/oder Fremdobjekte gegebenenfalls vor einer Kollision mit dem Fahrzeug selbst die Anbauteile des Fahrzeugs berühren.

DE 10 2009 032 541 A1 beschreibt ein Verfahren, bei welchem eine Änderung der für eine Abstandsmessung relevanten Außenkontur eines Fahrzeugs erfolgt, indem Steuerdaten innerhalb des Bordnetzes des Fahrzeugs ausgewertet werden, um Anbauteile zu berücksichtigen.

DE 10 2009 048 380 A1 beschreibt ein System, bei welchem eine Änderung der Sensorumgebung (beispielsweise Anhängen eines Anhängers) berücksichtigt wird, indem durch die geänderte Konfiguration beeinträchtige Sensoren abgeschaltet und gegebenenfalls vorhandene andere Sensoren hinzugeschaltet werden.

US 2002/149673 A1 offenbart ein Verfahren zum Anzeigen eines Bildes einer Rückfahrkamera, mit welchem der Fahrer eines Fahrzeugs einen Anhänger einfacher anfahren kann, um diesen an sein Fahrzeug anzukoppeln. Dabei erfasst die Rückfahrkamera einen Bereich hinter dem Fahrzeug, in welchem auch die Anhängerkupplung des Fahrzeugs angeordnet ist. Als Hilfestellung für den Fahrer wird eine Hilfslinie im Kamerabild angezeigt, die eine gerade rückwärtige Richtung des Fahrzeugs anzeigt.

Ausgehend von diesem Stand der Technik ist es eine Aufgabe der vorliegenden Erfindung, ein verbessertes System zur Erkennung von Änderungen an einer Fahrzeugkonfiguration in einem System zur Abstandsmessung zur Verfügung zu stellen.

### Offenbarung der Erfindung

Die vorstehend genannte Aufgabe wird erfindungsgemäß gelöst durch ein Abstandsmesssystem mit den Merkmalen gemäß Anspruch 1 sowie ein Verfahren zur Abstandsmessung mit den Merkmalen gemäß Anspruch 2. Das erfindungsgemäße Abstandsmesssystem umfasst mindestens einen Abstandssensor. Der Abstandssensor kann beispielsweise auf Basis der Ultraschalltechnik, der Lasertechnik, der Lidar- bzw. der Radartechnik arbeiten. Auf Basis der Daten des Abstandssensors wird die Entfernung des Fahrzeugs von Gegenständen seiner Umwelt ermittelt. Dabei kann die Entfernungsermittlung innerhalb der Abstandssensoren (so genannte "intelligente" Sensoren) oder erst durch sich anschließende Auswerteeinheiten erfolgen. Die Verbindung zwischen den Abstandssensoren und der Auswerteeinheit oder den Auswerteeinheiten kann einerseits kabelgebunden oder drahtlos (z.B. per Funk) erfolgen. Zusätzlich umfasst das System einen zweiten Sensor, der als optischer Sensor, insbesondere als ein Kamerasystem mit bevorzugt ein oder zwei Kameras, ausgestaltet ist. Als Kamera kommt hierbei insbesondere eine Rückfahrkamera oder eine Kamera zur Verkehrszeichenerkennung in Betracht, wobei selbstverständlich auch zusätzliche Kameras vorgesehen werden können. Auch die Verbindung zwischen dem zweiten Sensor und der Auswerteeinheit oder den Auswerteeinheiten kann einerseits kabelgebunden oder drahtlos (z.B. per Funk) erfolgen. Weiter umfasst das erfindungsgemäße System eine Auswerteeinheit, die beispielsweise einen Mikroprozessor bzw. Mittel zur Abarbeitung von Verfahrensschritten umfassen kann. Hierbei ist die Auswerteeinheit eingerichtet, Daten des zweiten Sensors zu erhalten und fest zum zweiten Sensor angeordnete Objekte zu erkennen. Dies kann beispielsweise durch Verfahrensschritte zur Erkennung von Objekten erfolgen. Insbesondere kann hierbei eine Untersuchung zweier zeitlich aufeinander folgend aufgenommener Kamerabilder vorgenommen werden und hinsichtlich identischer Bildbestandteile untersucht werden, welche mit einer höheren Wahrscheinlichkeit fest am Fahrzeug und/oder fest zum Abstandssensor angebracht sind. Weiter ist die Auswerteeinheit eingerichtet, eine Auswertung der Daten des Abstandssensors auf Grundlage der Daten des zweiten Sensors zu modifizieren. Eine solche Modifikation kann beispielsweise einen Kalibrierschritt umfassen. Auf diese Weise kann durch das erfindungsgemäße System eine selbsttätige Anpassung der Informationsverarbeitung auf Grundlage der Daten des Abstandssensors vorgenommen werden.

Gemäß einem weiteren Aspekt betrifft die vorliegende Erfindung ein Verfahren zur Abstandsmessung, insbesondere eines Fahrzeugs zu seiner Umgebung, welches die Schritte umfasst, wie sie zuvor in Verbindung mit dem erfindungsgemäßen System erläutert worden sind.

Die Unteransprüche betreffen bevorzugte Ausführungsformen der vorliegenden Erfindung.

Vorteilhaft wird die Auswertung der Daten des Abstandssensors dahingehend modifiziert, dass Abstände zwischen dem Abstandssensor und den fest zum Abstandssensor und/oder zum Fahrzeug angeordneten Objekten nicht mehr berücksichtigt werden. Mit anderen Worten wird auf Grundlage der Daten des zweiten Sensors die räumliche Anordnung eines fest montierten Objekts zum Abstandssensor ermittelt und der Abstand des fest montierten Objekts zum Abstandssensor dahingehend nicht weiter verwendet, indem das System diesen Abstand nicht als Abstand des Fahrzeugs bzw. seiner Anbauten zu seiner Umgebung meldet bzw. weiter verarbeitet. Auf diese Weise wird ein permanentes Ansprechen der Abstandssensoren auf fest am Fahrzeug und/oder fest zum Abstandssensor montierte Objekte unterdrückt.

Weiter vorteilhaft umfasst die Modifikation der Auswertung der Abstandsdaten eine zusätzliche Ermittlung des Abstandes der festen Objekte gegenüber der Umwelt. Mit anderen Worten wird auf Basis der Daten des zweiten Sensors eine Auswertung der Abstandsdaten dahingehend vorgenommen, dass eine Quantifizierung und eine Beurteilung von ermittelten Abstandsdaten nicht hinsichtlich einer bisher bestehenden Fahrzeugkonfiguration vorgenommen werden, sondern Objekte des Fahrzeugumfeldes hinsichtlich ihres Abstandes zu einer geänderten (aktuellen) Fahrzeugkonfiguration bzw. -kontur beurteilt werden. Im Rahmen der vorliegenden Erfindung können die als "feste Objekte" bezeichneten Strukturen einerseits Anbauteile am Fahrzeug, andererseits jedoch auch jegliche geänderte Fahrzeugkonfiguration mit Einfluss auf die Kontur des Fahrzeugkomplexes verstanden. Hierzu gehören somit jegliche Form von Anhängern, Dachaufbauten, Aufliegern, geöffnete Türen und Kofferraumdeckel, ausgefahrene bzw. eingeklappte Anhängerkupplungen, zusätzliche Spiegel für den Betrieb mit einem Wohnanhänger etc. Es wird somit eine automatische Anpassung bzw. Kalibrierung des Systems auf neu hinzugekommene bzw. geänderte Fahrzeuganbauten bzw. -konfigurationen vorgenommen.

Weiter vorteilhaft umfasst ein Verfahrensschritt bzw. eine Funktion des erfindungsgemäßen Abstandsmesssystems eine Ermittlung der räumlichen Erstreckung der fest zum zweiten Sensor angeordneten Objekte, indem eine optische Objekterkennung, anhand vordefinierter optischer Charakteristika durchgeführt wird. Dies kann beispielsweise dadurch erfolgen, dass aus den Datensätzen des zweiten Sensors Objekte bzw. Formen oder Strukturen (z.B. typische Geometrien von Anhängerkupplungen, einem Spoiler, einer Fahrradtransportvorrichtung) extrahiert werden, welche anhand vordefinierter Datensätze dahingehend beurteilt werden, um welche Art von Anbauteil bzw. Konfigurationsänderung es sich vorliegend handelt. Hierzu können insbesondere anhand von zeitlich aufeinander folgend aufgenommenen Bildern bzw. Datensätzen Strukturen ermittelt werden, welche sich im Wesentlichen nicht über der Zeit und/oder einer mittels Odometriesensoren ermittelten Fahrstrecke verändert haben, also als fest am Fahrzeug verankert zu erachten sind. Hierbei kann ein Vergleich und/oder eine Korrelation zweier Datensätze durchgeführt werden und lediglich die unveränderten Bildbestandteile unterhalb eines vordefinierten Maximalabstandes zum Sensor als festes Anbauteil bzw. Fahrzeugbestandteil bei der Abstandsmessung berücksichtigt werden.

Vorteilhaft kann das erfindungsgemäße Verfahren die Aktivierung eines Objekterkennungsalgorithmus umfassen, alternativ oder zusätzlich auch eine Anwenderbestätigung des optisch erkannten Objekts bzw. der zu diesem assoziierten Daten (Bauart, Modell-Nummer, Baujahr, Länge, Breite, Höhe, Gewicht, maximal zulässiger Reisegeschwindigkeit) und weitere Informationen zu sinnvollen Sensormodifikationen bei Installation eines solchen Objektes umfassen. Insbesondere können Informationen zu am festen Objekt selbst vorhandenen Sensoren und/oder Systemen in Speichermitteln des Fahrzeugs bzw. des erfindungsgemäßen Systems vorgehalten werden, welche beispielsweise bei der Abstandsmessung Berücksichtigung und/oder Verwendung finden können. Somit können auch diese Sensoren in das erfindungsgemäße System am Fahrzeug selbst integriert und die von ihnen abgegebenen Signale ausgewertet werden. Auch die Verbindung zwischen den Sensoren am festen Objekt und der im Fahrzeug angeordneten Auswerteeinheit oder den Auswerteeinheiten kann einerseits kabelgebunden oder drahtlos (z.B. per Funk) erfolgen. Hieraus bietet sich der Vorteil, dass Informationen zu den Abmessungen eines Anbauteils bzw. einer geänderten Konfiguration auch für vom zweiten Sensor nicht direkt erfassbare (verdeckte) Abschnitte des Anbauteils ins System eingespeist werden können.

Weiter bevorzugt kann der Abstandssensor ein Ultraschallsensor sein. Ein solches Sensorverfahren ist mittlerweile weitreichend erprobt und Sensoreinheiten sind als Massenprodukte kostengünstig erhältlich.

Erfindungsgemäß ist der zweite Sensor ein optischer Sensor, insbesondere ein Kamerasystem mit bevorzugt ein oder zwei Kameras. Optische Kameras sind als Grund- oder Sonderausstattung in Verbindung mit anderen Funktionen bzw. Assistenzsystemen Bestandteil vieler Fahrzeuge, so dass ein zusätzlicher Hardwareaufwand zur Implementation des erfindungsgemäßen Systems nicht erforderlich ist. Für den Fall, dass der Bereich eines Abstandssensors mittels zweier Kameras erfasst wird, kann durch stereoskopische Datenauswertung eine Entfernungsauswertung von Strukturen des festen Objekts vorgenommen werden.

Bevorzugt kann die Auswertung der Daten des zweiten Sensors z.B. durch Korrelation und/oder Vergleich zweier Bilder des zweiten Sensors eine Auswertung von Odometriedaten des Fahrzeugs umfassen. Hierdurch kann ermittelt werden, ob zumindest einzelne Bildbestandteile zwischen den zeitlich aufeinander folgend aufgenommenen Bildern einen unveränderten Teil des Fahrzeugumfeldes darstellen könnten. Beispielsweise könnte auch eine Auswertung zweier zeitlich aufeinander folgend aufgenommener Bilder unterbleiben, wenn anhand der Odometriedaten des Fahrzeugs ermittelt wird, dass das Fahrzeug seine Position gegenüber der Umwelt nicht verändert hat. Hierdurch kann ein rechenaufwändiger Vergleich bzw. eine rechenaufwändige Korrelation zweier Datensätze des zweiten Sensors unterbleiben und Systemressourcen gespart werden.

Die vorstehend erläuterten Aspekte und Merkmale der vorliegenden Erfindung werden im Folgenden anhand der beigefügten Zeichnungsfiguren veranschaulicht.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht einer Systemkonfiguration gemäß einem Ausführungsbeispiel des erfindungsgemäßen Abstandsmesssystems;
- Figur 1a: eine schematische Ansicht eines zweiten Sensors, wie sie durch ein in Figur 1 gezeigtes System aufgenommen werden könnte;
- Figur 2: eine schematische Ansicht einer alternativen Systemkonfiguration gemäß einem Ausführungsbeispiel des erfindungsgemäßen Abstandsmesssystems;
- Figur 2a: eine mögliche Ansicht eines in Figur 2 gezeigten zweiten Sensors;
- Figur 3: ein Ablaufdiagramm, veranschaulichend die Schritte eines Ausführungsbeispiels des erfindungsgemäßen Verfahrens.

### Ausführungsformen der Erfindung

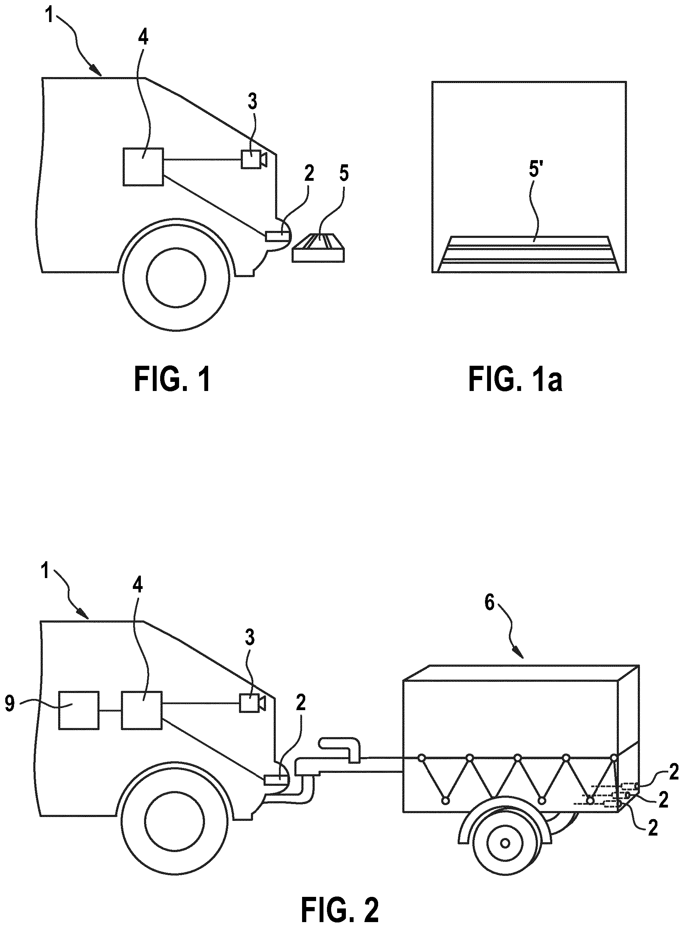

Figur 1 zeigt ein Fahrzeug 1, in welchem ein erfindungsgemäßes Abstandsmesssystem vorgesehen ist. Ein in der Stoßstange des Fahrzeugs 1 angeordneter Abstandssensor 2 ist mit einer Auswerteeinheit 4 verbunden. Die Auswerteeinheit 4 enthält (nicht dargestellte) Speichermittel zum Ablegen und Abrufen von aufgenommenen Bildern und/oder Charakteristiken. Im Bereich des Kofferraumdeckels des Fahrzeugs 1 ist ein zweiter Sensor 3 angeordnet, der beispielsweise eine Rückfahrkamera zum Zwecke der Einparkassistenz sein könnte. Der zweite Sensor 3 ist ebenfalls mit der Auswerteeinheit 4 verbunden, welche eingerichtet ist, die Signale beider Sensoren erfindungsgemäß zu verarbeiten. Weiter im Bereich der hinteren Stoßstange des Fahrzeugs 1 ist ein Fahrradträger 5 als fest zum zweiten Sensor 3 angeordnetes Objekt montiert.

Figur 1a zeigt eine mögliche Ansicht des in Figur 1 verbauten zweiten Sensors 3, welche im unteren Bildbereich eine Abbildung 5' des Fahrradträgers 5 zeigt. Die Abbildung 5' des Fahrradträgers 5 ist im Wesentlichen unabhängig von der aktuellen Position bzw. Fahrsituation des Fahrzeugs 1 und kann daher einfach als fest am Fahrzeug 1 montierte Struktur erkannt werden.

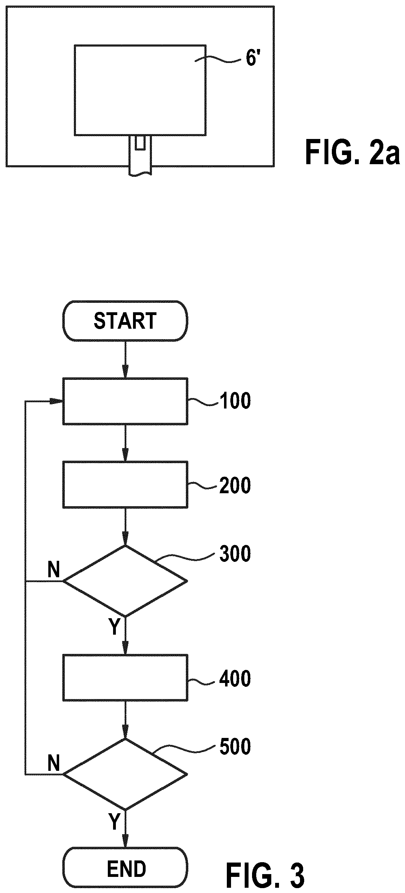

Figur 2 zeigt ein Fahrzeug 1, in welchem das in Verbindung mit Figur 1 beschriebene Abstandsmesssystem verbaut ist. An einer Anhängerkupplung des Fahrzeugs 1 ist ein Anhänger 6 angeordnet. Im Heckbereich des Anhängers 6 befinden sich Abstandssensoren 2, die Abstandssignale aufnehmen und über (nicht dargestellte) Kabel an das Fahrzeug 1 bzw. ein in diesem befindliches Parkassistenzsystem weiterleiten können. Anhand des erfindungsgemäßen Abstandsmesssystems können optische Charakteristika (Strukturen, Proportionen) des Anhängers erfasst und mit vorhandenen Datensätzen abgeglichen werden. Hierdurch kann festgestellt werden, welche Abmaße, welches Gewicht sowie welche zusätzlichen Sensoren 2 der Anhänger 6 hat und das im Fahrzeug 1 verbaute Abstandsmesssystem bzw. Parkassistenzsystem für die Verwendung des Anhängers 6 bzw. der in ihm verbauten Sensoren 2 eingerichtet (z.B. die hinteren Sensoren abgeschaltet) werden. Alternativ oder zusätzlich können in den mit der Auswerteeinheit 4 verbundenen Speichermitteln 5 Informationen hinterlegt sein, anhand welcher die in Figur 2a dargestellte Abbildung 6' des Anhängers 6 dahingehend ausgewertet wird, welche Abmaße, welches Gewicht und/oder welche Sensoren ein Anhänger 6 dieser Bauart mit sich bringt. Mit anderen Worten können bauartbedingte Merkmale (z.B. das Seitenverhältnis der Vorderansicht des Anhängers 6) in den Speichermitteln 5 hinterlegt und zur Grundlage für eine Modifikation der Auswertung der Signale des Abstandssensors 2 im erfindungsgemäßen Abstandsmesssystem gemacht werden.

Figur 3 zeigt ein Ablaufdiagramm mit Verfahrensschritten eines Ausführungsbeispiels des erfindungsgemäßen Verfahrens zur Abstandsmessung. Das Verfahren kann beispielsweise dadurch gestartet werden, dass die Zündung des Fahrzeugs eingeschaltet wird, eine bestimmte Fahrstufe (rückwärts "R") oder eine Betätigungseinrichtung durch einen Fahrer bzw. Anwender des erfindungsgemäßen Systems betätigt wird. In Schritt 100 kann eine Kalibrierung des Systems bzw. der in ihm verbauten Sensoren erfolgen. Zudem erfasst das System mittels des zweiten Sensors 3 Videodaten und leitet diese an die Auswerteeinheit 4 weiter. In Schritt 200 werden aus den Speichermitteln 9 Objektdaten geladen und eine Objekterkennung auf Grundlage der vom zweiten Sensor 3 erfassten Daten ausgeführt. In nachfolgendem Schritt 300 wird entschieden, ob ein (Anbau-)Objekt auf Basis der Daten des zweiten Sensors 3 ermittelt werden konnte. Ist dies nicht der Fall (N), fährt das Verfahren mit Schritt 100 fort. Ist dies der Fall (Y), wird in Schritt 400 eine Modifikation der Auswertung der Daten des Abstandssensors 2 gemäß dem in Schritt 200 ermittelten (Anbau-)Objekt durchgeführt. In Schritt 500 wird überprüft, ob eine Abbruchbedingung für das erfindungsgemäße Verfahren erfüllt ist. Dies kann beispielsweise eine geänderte Klemme (z.B. "Zündung aus"), eine Anwendereingabe und/oder eine erfolgreiche Erkennung einer geänderten Fahrzeugkonfiguration sein. Ist dies nicht der Fall (N), fährt das erfindungsgemäße Verfahren in Schritt 100 mit einer Erfassung von Videodaten fort. Ist die Abbruchbedingung erfüllt (Y), endet das erfindungsgemäße Verfahren.

Kerngedanke der vorliegenden Erfindung ist, auf Grundlage eines mittels eines zweiten Sensors 3 ermittelten Datensatzes eine Modifikation der Auswertung mittels eines Abstandssensors 2 aufgenommener Daten durchzuführen. Für die Charakteristika, welche mittels des zweiten Sensors 3 aufgenommen und anschließend ausgewertet werden können, kommen dabei beispielsweise objektspezifische Abmaße bzw. optische Merkmale in Frage.

Auch wenn die vorliegende Erfindung anhand der beigefügten Zeichnungen ausführlich und im Detail beschrieben worden ist, so stehen Modifikationen und Übertragungen von Merkmalen der verschiedenen Ausführungsbeispiele auf jeweils andere Ausführungsbeispiele im Belieben des Fachmanns und sind als im Bereich der vorliegenden Erfindung zu erachten, deren Schutzbereich allein durch die beigefügten Patentansprüche definiert wird.

## Patentansprüche

1. Abstandsmesssystem, insbesondere für ein Fahrzeug (1), umfassend:
- mindestens einen Abstandssensor (2);
- einen zweiten Sensor (3); und
- eine Auswerteeinheit (4);
wobei die Auswerteeinheit (4) eingerichtet ist,
- aus mittels des zweiten Sensors (3) ermittelten Daten fest am Fahrzeug angeordnete Objekte (5, 6) zu erkennen und
- eine Auswertung der Daten des Abstandssensors (2) auf Grundlage der Daten des zweiten Sensors (3) zu modifizieren, **dadurch gekennzeichnet, dass** der zweite Sensor (3) ein optischer Sensor, insbesondere ein Kamerasystem mit bevorzugt ein oder zwei Kameras, ist.

2. Verfahren zur Abstandsmessung, insbesondere für ein Fahrzeug (1), mittels mindestens der Komponenten
- ein Abstandssensor (2);
- ein zweiter Sensor (3); und
- eine Auswerteeinheit (4);
wobei das Verfahren die Schritte umfasst:
- aus mittels eines zweiten Sensors (3) ermittelten Daten fest am Fahrzeug angeordnete Objekte (5, 6) zu erkennen und
- eine Auswertung der Daten des Abstandssensors (2) auf Grundlage der Daten des zweiten Sensors (3) zu modifizieren, **dadurch gekennzeichnet, dass** der zweite Sensor (3) ein optischer Sensor, insbesondere ein Kamerasystem mit bevorzugt ein oder zwei Kameras, ist.

3. Verfahren nach Anspruch 2 oder Abstandsmesssystem nach Anspruch 1, wobei die Modifikation umfasst:
- dass bei einer Auswertung der Daten des Abstandssensors (2) Abstände zwischen dem Abstandssensor (2) und den fest am Fahrzeug angeordneten Objekten (5, 6) nicht berücksichtigt werden.

4. Verfahren nach Anspruch 2 oder 3 oder Abstandsmesssystem nach Anspruch 1 oder 3, wobei die Modifikation eine zusätzliche Auswertung des Abstandes der fest am Fahrzeug angeordneten Objekte (5, 6) gegenüber der Umwelt umfasst.

5. Verfahren nach Anspruch 2, 3 oder 4, wobei eine Ermittlung der räumlichen Erstreckung der fest am Fahrzeug angeordneten Objekte (5, 6)
- durch optische Objekterkennung anhand vordefinierter optischer Charakteristika, und/oder
- durch Korrelation bzw. Vergleich zweier optisch aufgenommener Bilder, erfolgt.

6. Abstandsmesssystem nach Anspruch 1 oder 3 bis 5 oder Verfahren nach einem der Ansprüche 2 bis 5, wobei die Auswertung der Daten des zweiten Sensors (3) eine Korrelation und/oder einen Vergleich zweier Bilder des zweiten Sensors (3), insbesondere unter Berücksichtigung von Odometriedaten des Fahrzeugs (1), umfasst.

7. Abstandsmesssystem nach Anspruch 1 oder 3 bis 6, wobei der Abstandssensor (2) ein Ultraschallsensor ist.

## Claims

1. Distance measuring system, in particular for a vehicle (1), comprising:
- at least one distance sensor (2);
- a second sensor (3); and
- an evaluation unit (4);
the evaluation unit (4) being set up
- to detect objects (5, 6) permanently arranged on the vehicle from data determined by means of the second sensor (3), and
- to modify an evaluation of the data from the distance sensor (2) on the basis of the data from the second sensor (3), **characterized in that** the second sensor (3) is an optical sensor, in particular a camera system preferably having one or two cameras.

2. Method for measuring distance, in particular for a vehicle (1), by means of at least the components of
- a distance sensor (2);
- a second sensor (3); and
- an evaluation unit (4);
the method comprising the steps of:
- detecting objects (5, 6) permanently arranged on the vehicle from data determined by means of a second sensor (3), and
- modifying an evaluation of the data from the distance sensor (2) on the basis of the data from the second sensor (3), **characterized in that** the second sensor (3) is an optical sensor, in particular a camera system preferably having one or two cameras.

3. Method according to Claim 2 or distance measuring system according to Claim 1,
the modification comprising:
- the fact that distances between the distance sensor (2) and the objects (5, 6) permanently arranged on the vehicle are not taken into account when evaluating the data from the distance sensor (2).

4. Method according to Claim 2 or 3 or distance measuring system according to Claim 1 or 3, the modification comprising an additional evaluation of the distance between the objects (5, 6) permanently arranged on the vehicle and the environment.

5. Method according to Claim 2, 3 or 4, the spatial extent of the objects (5, 6) permanently arranged on the vehicle being determined
- by means of optical object detection on the basis of predefined optical characteristics, and/or
- by correlating or comparing two optically recorded images.

6. Distance measuring system according to Claim 1 or 3 to 5 or method according to one of Claims 2 to 5, the evaluation of the data from the second sensor (3) comprising correlating and/or comparing two images from the second sensor (3), in particular taking into account odometry data of the vehicle (1).

7. Distance measuring system according to Claim 1 or 3 to 6, the distance sensor (2) being an ultrasonic sensor.

## Revendications

1. Système de mesure de distance, notamment destiné à un véhicule (1), comprenant:
- au moins un capteur de distance (2);
- un second capteur (3) ; et
- une unité d'évaluation (4);
dans lequel l'unité d'évaluation (4) est conçue pour
- détecter des objets (5, 6) disposés de manière fixe sur le véhicule à partir de données déterminées au moyen du second capteur (3), et
- modifier une évaluation des données du capteur de distance (2) sur la base des données du second capteur (3), **caractérisé en ce que** le second capteur (3) est un capteur optique, notamment un système de caméra comportant de préférence une caméra ou deux caméras.

2. Procédé de mesure de distance, notamment destiné à un véhicule (1), comportant au moins les composants suivantes:
- un capteur de distance (2);
- un second capteur (3) ; et
- une unité d'évaluation (4);
dans lequel le procédé comprend les étapes consistant à:
- détecter des objets (5, 6) disposés de manière fixe sur le véhicule à partir de données déterminées au moyen d'un second capteur (3), et
- modifier une évaluation des données du capteur de distance (2) sur la base des données du second capteur (3), **caractérisé en ce que** le second capteur (3) est un capteur optique, notamment un système de caméra comportant de préférence une caméra ou deux caméras.

3. Procédé selon la revendication 2 ou système de mesure selon la revendication 1, dans lequel la modification comprend:
- la non prise en compte des distances entre le capteur de distance (2) et les objets (5, 6) disposés de manière fixe sur le véhicule lors d'une évaluation des données du capteur de distance (2).

4. Procédé selon la revendication 2 ou 3 ou système de mesure de distance selon la revendication 1 ou 3, dans lequel la modification comprend en outre une évaluation de la distance des objets (5, 6) disposés de manière fixe sur le véhicule par rapport à l'environnement.

5. Procédé selon la revendication 2, 3 ou 4, dans lequel une détermination de l'extension spatiale des objets (5, 6) disposés de manière fixe sur le véhicule est effectuée
- par détection optique d'objets sur la base de caractéristiques optiques prédéfinies, et/ou
- par corrélation ou comparaison de deux images acquises optiquement.

6. Système de mesure de distance selon la revendication 1 ou 3 à 5 ou procédé selon l'une quelconque des revendications 2 à 5, dans lequel l'évaluation des données du second capteur (3) comprend une corrélation et/ou une comparaison de deux images du second capteur (3), notamment en tenant compte de données odométriques du véhicule (1).

7. Système de mesure de distance selon la revendication 1 ou 3 à 6, dans lequel le capteur de distance (2) est un capteur à ultrasons.
